(19) Europäisches Patentamt

European Patent Office

Office européen des brevets

(11) Numéro de publication: **0 295 974 B1**

(12) **FASCICULE DE BREVET EUROPEEN**

(45) Date de publication de fascicule du brevet: **22.07.92** (51) Int. Cl.⁵: **H04N 11/08**, H04N 7/08

(21) Numéro de dépôt: **88401136.2**

(22) Date de dépôt: **10.05.88**

(54) **Procédé et dispositif de décodage de signaux duobinaires émis par salves.**

(30) Priorité: **10.06.87 FR 8708067**

(43) Date de publication de la demande:
**21.12.88 Bulletin 88/51**

(45) Mention de la délivrance du brevet:
**22.07.92 Bulletin 92/30**

(84) Etats contractants désignés:
**DE GB NL**

(56) Documents cités:

RUNDFUNKTECHNISCHE MITTEILUNGEN, vol. 29, no. 5, septembre/octobre 1985, pages 229-246, Norderstedt, DE; C. DOSCH: "D- und D2-MAC/Paket - die Mitglieder der MAC-Fernsehstandardfamilie mit geschlossener Basisbanddarstellung"

SPECIFICATION OF THE SYSTEMS OF THE MAC/PACKET FAMILY, octobre 1986, pages 328-358, référence TECH 3258-E, éditeur G. Waters pour l'E.B.U. (European broadcasting union, technica centre), Bruxelles, BE

NACHRICHTENTECHNISCHE ZEITSCHRIFT N.T.Z., vol. 39, no. 1, janvier 1986, pages 18-22, Berlin, DE; P.H. GRAF: "Die wichtigsten Eigenschaften der Satelliten-Fernsehnorm D2-MAC/Paket"

(73) Titulaire: **FRANCE TELECOM**
**6 place d'Alleray**
**F-75015 Paris(FR)**

Titulaire: **TELEDIFFUSION DE FRANCE**
**10, rue d'Oradour sur Glane**
**F-75015 Paris(FR)**

(72) Inventeur: **Alard, Michel**
**3, Passage du Louis d'Or**
**F-35000 Rennes(FR)**
Inventeur: **Declerck, Christophe**
**26, rue de la Motte**
**F-35630 Hede(FR)**
Inventeur: **Veillard, Jacques**
**La Vizeule Montgamont**
**F-35760 Saint Gregoire(FR)**

(74) Mandataire: **Fort, Jacques et al**
**CABINET PLASSERAUD 84, rue d'Amsterdam**
**F-75009 Paris(FR)**

EP 0 295 974 B1

Rank Xerox (UK) Business Services

## Description

L'invention concerne le décodage des signaux codés en duobinaire émis par salves et elle trouve une application particulièrement importante dans les installations de diffusion de programmes de télévision sous forme d'un multiplex de signaux analogiques d'image et de signaux numériques, codés en duobinaire, de son et de données.

Des normes ont été établies pour la diffusion par satellite de programmes sous forme de tels multiplex, sous le nom D-MAC/PAQUET (à un débit numérique de 20,25 Mbits/s) et D2-MAC/PAQUET (à un débit de 10,125 Mbits/s).

Le mode classique de décodage des signaux duobinaires consiste à comparer le niveau du signal à des seuils. Un mode de décodage plus efficace, décrit dans la demande de brevet FR-A-2 606 575, consiste à utiliser un critère de maximum de vraisemblance et à mettre en oeuvre l'algorithme de Viterbi. Cette solution permet, dans le cas d'une transmission du signal duobinaire en plein temps (c'est-à-dire de façon continue) d'atteindre des performances réduisant la valeur du rapport signal à bruit minimal acceptable.

Mais l'application pure et simple du décodage de Viterbi à des signaux émis par salves dégrade notablement les performances. Cela est en particulier dû à ce que, pendant les intervalles séparant les salves, le décodeur reçoit un signal qui n'est pas codé duobinaire (par exemple le signal MAC) et qu'il soumet au décodage alors qu'il présente des violations de la règle de codage.

A ce point d'analyse, il faut rappeler que, suivant la norme D ou D2-MAC/PAQUET, les signaux numériques codés en duobinaire du multiplex peuvent se présenter sous deux formes dans la trame du signal de télévision :

- avec un format fixe, la position des différents messages étant fixe, constante par rapport aux signaux de synchronisation contenus dans le multiplex, et connue du décodeur ;
- avec un format variable, la position des messages n'étant pas fixée, ce qui rend nécessaire de transmettre, dans la trame du signal de télévision, la position de différents messages.

Dans le cas le plus fréquent, une partie des messages d'information sous forme numérique est en format fixe et une autre partie est en format variable.

Par exemple, la norme intitulée "Spécification du système D2-MAC/PAQUET" publiée en septembre 1985 par l'Etat Français, prévoit que les lignes de la suppression trame peuvent être utilisées pour la transmission de signaux numériques de télétexte. Ces signaux sont générés par le même codeur duobinaire que celui utilisé pour coder les sons et les données transmis dans les intervalles de suppression ligne, l'affectation des lignes utilisées par le télétexte étant définie par une information relative à la structure du multiplex temporel (information dite TDM CTL, décrite en partie I, chapitre 5-4 de la Norme ci-dessus mentionnée). Cette information est contenue dans la ligne 625 de la trame télévision. Une organisation similaire est prévue pour le D-MAC/PAQUET.

Il est nécessaire que le mode de décodage prévu à la réception puisse s'accommoder du second genre de format, ce qui complique encore le problème.

Par ailleurs, deux cas peuvent se présenter, suivant le mode de fonctionnement de l'émetteur de diffusion. Dans le premier cas, le fonctionnement du codeur duobinaire est interrompu entre les salves successives. Dans le second cas, qui est celui prévu par la Norme D2-MAC/PAQUET, le codeur duobinaire continue à fonctionner entre les salves. Pendant la transmission de signal d'image MAC et pendant les périodes d'alignement, la séquence de données appliquée à l'entrée du codeur duobinaire est simplement forcée à zéro.

L'invention vise à fournir un procédé de décodage de signal duobinaire émis par salves permettant de se rapprocher des performances obtenues en cas de flot continu de données, et ce sans conduire à des complications excessives.

Dans ce but, l'invention propose notamment un procédé de décodage de données émises sous forme de signaux codés en duobinaire et émis par salves dans un multiplex, caractérisé en ce qu'on numérise le multiplex en bande de base et on le soumet à un décodage de Viterbi en masquant les parties du multiplex qui provoqueraient un viol de la règle de codage duobinaire dû aux interruptions entre salves.

Un premier mode d'exécution de l'invention, qui permet d'atteindre des résultats optimaux, exige que soient connus les emplacements des messages d'information codés en duobinaire à traiter. Dans ce cas, on masque les parties non codées en duobinaire en interrompant le signal d'horloge du décodeur. Il est également nécessaire de respecter la règle de parité du codage.

Une solution plus simple, mais qui ne permet pas d'arriver aux résultats les plus favorables, consiste à extraire les informations transmises en format fixe connues du récepteur, en ignorant les informations supplémentaires susceptibles d'être transmises en format variable dans les intervalles suppression trame :

c'est le décodeur à seuil normal qui assurera la fonction de décodage pendant les intervalles de suppression trame. Cette solution permet de se dispenser de traiter les données contenues dans la ligne 625.

Il est possible d'atteindre des résultats optimaux sans avoir à interprêter les informations contenues dans la ligne 625, à condition que le nombre de bits au niveau 1 contenus dans chaque ligne de la suppression trame soit pair.

Cette condition peut être systématiquement remplie en ajoutant un bit de parité dans chaque bloc correspondant à une ligne de données pendant la période de suppression trame. Dans ce cas, le dernier bit du bloc transmis durant une ligne de la suppression trame avant premier bit de synchronisation ligne est le bit de parité du bloc de 531 bits qui le précède. Ce bit est transmis au niveau 0 si le nombre de "1" des 531 bits précédents est pair ; il est transmis au niveau 1 si le nombre de "1" des 531 bits précédents est impair.

Ce bit "tampon" en fin de chaque salve permet d'encaisser l'erreur dans le cas où le décodeur de Viterbi fonctionne en continu (pas d'arrêt en fin de chaque salve). Il se trouve que ce bit est facile à introduire car dans la norme D-MAC/Paquet il reste un bit libre en fin de chaque salve D.

L'invention propose également un dispositif permettant de mettre en oeuvre le procédé ci-dessus défini. Le dispositif conforme à la revendication 8 comprend des moyens d'extraction d'horloge du signal, un convertisseur analogique/numérique, un décodeur de Viterbi et des moyens destinés à interrompre le fonctionnement du décodeur de Viterbi par interruption du signal d'horloge appliqué au décodeur pendant les interruptions entre salves.

L'invention sera mieux comprise à la lecture de la description qui suit de modes particuliers de réalisation de l'invention, donnés à titre d'exemples non limitatifs. La description se réfère aux dessins qui l'accompagnent, dans lesquels :

- la Figure 1 est un schéma montrant la constitution d'une trame de signal D2 ou D-MAC/PAQUET ;
- les Figures 2 et 3 sont des schémas fonctionnels de dispositifs de décodage utilisant un décodeur de Viterbi, permettant respectivement de décoder des signaux D2 et D-MAC/PAQUET ;
- la Figure 4 est un synoptique montrant une fraction d'un dispositif de décodage constituant une variante de celui montré en Figure 2 ;
- la Figure 5, similaire à la Figure 4, montre une variante de réalisation ;
- la Figure 6 est un diagramme explicatif montrant le treillis du code duobinaire ;
- la Figure 7 montre un exemple de décodage d'un signal duobinaire particulier selon l'algorithme de Viterbi ;
- les Figures 8a et 8b montrent une constitution possible de deux parties constitutives du décodeur de Viterbi d'une unité implantable dans le dispositif décodeur complet.

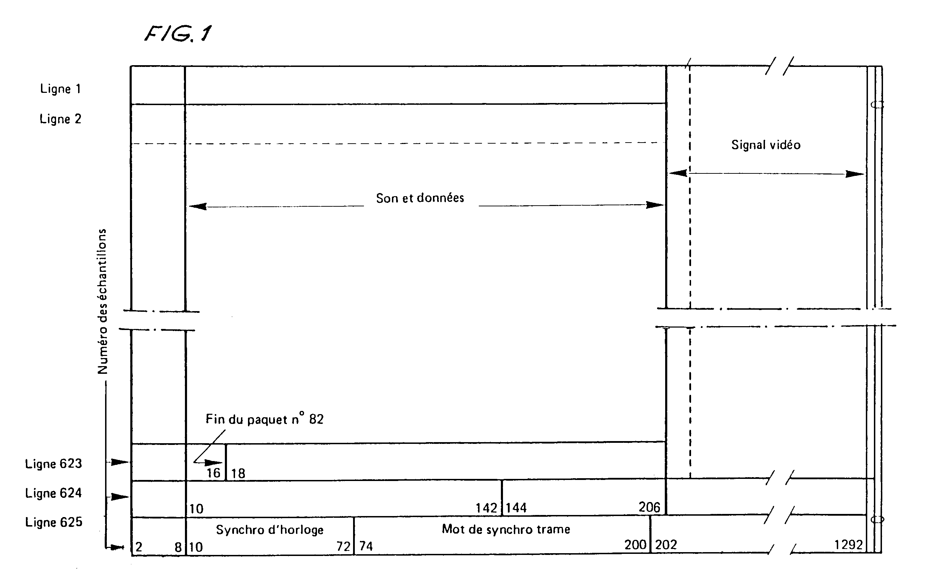

On considèrera d'abord, dans ce qui suit, le décodage des signaux de son et de données contenus dans un multiplex conforme à la norme D2-MAC/PAQUET. Ce multiplex a la structure montrée de façon simplifiée en Figure 1 où les légendes L1,..., L625 désignent les lignes successives de la trame de télévision. Le multiplex son-données occupe 623 salves numériques par image, la ligne 624 comportant des bits de réserve et un marqueur d'alignement, tandis que la totalité de la ligne 625 est affectée à la transmission d'un mot de synchronisation d'horloge, d'un mot de synchronisation de trame et de données de service. Chaque ligne comporte un mot de synchronisation de six bits.

Le son et les données sont transmis en paquets de longueur fixe, comportant chacun 751 bits, dont un en-tête de vingt-trois bits et quatre-vingt onze octets de données utiles. Chaque ligne comporte quatre-vingt dix-neuf bits utiles, le premier paquet débutant immédiatement après le mot de synchronisation ligne de la ligne 1 et le paquet n° 82 se terminant dans la ligne 623.

Le nombre de lignes affectées au télétexte peut être implicite (format fixe) ou laissé au libre choix du diffuseur (format variable) et, dans ce cas, le nombre de lignes et leurs numéros sont indiqués dans la ligne 625.

Dans ces conditions, pour obtenir un fonctionnement optimal, le procédé de décodage devra remplir deux conditions :

1. Avant décodage de Viterbi proprement dit, le signal décodé doit être traité pour reconstituer à l'entrée du décodeur une séquence duobinaire dans laquelle il n'existe aucun viol de la règle de codage duobinaire (c'est-à-dire aucune transition interdite), en éliminant toutes les parties du signal ne représentant pas des messages effectivement diffusés.

2. Il faut éliminer toutes les séquences de "zéro" connues du récepteur lors de la mise en oeuvre de l'algorithme de Viterbi en interrompant le signal d'horloge, de façon à éviter tout débordement dans les registres de mémoire du circuit de décodage de Viterbi.

Si le nombre de "zéros" éliminés est pair, il suffit de juxtaposer les échantillons reçus de salve à salve.

3

S'il est impair, les échantillons reçus seront juxtaposés avec inversion de salve à salve pour éviter un viol de la règle de codage.

L'application de ces règles exige qu'il soit possible de déterminer à la réception l'emplacement des données introduites lors du codage à l'émission. Dans le cas du système D2 et D-MAC/PAQUET, ces données sont soit mémorisées dans le récepteur dans le cas d'un format fixe, dit "implicite", soit contenues dans la ligne 625 que le récepteur est prévu pour interpréter.

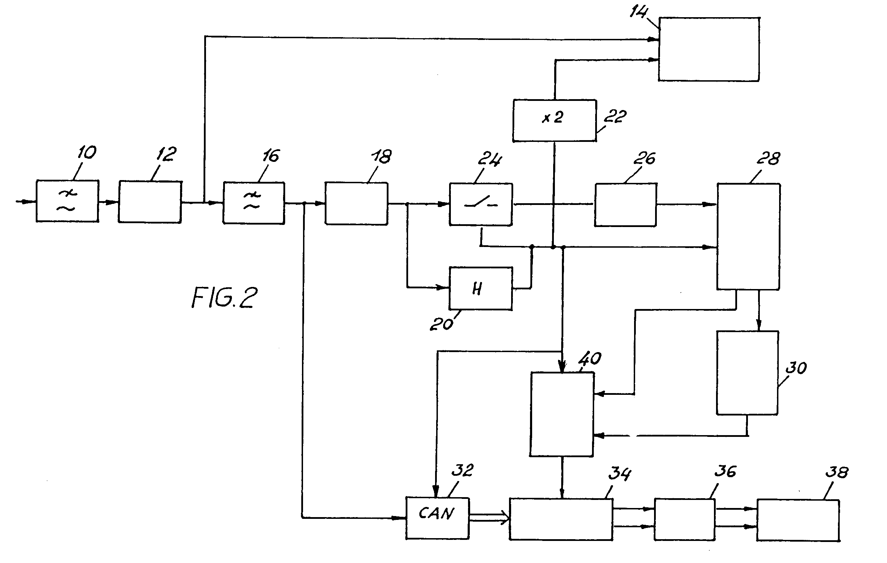

Dans le mode de réalisation de l'invention montré en Figure 2, destiné à un récepteur D2-MAC/PAQUET, le dispositif de décodage est précédé d'un filtre passe-bas 10 de largeur de bande nominale égale à 8,4 MHz. Le signal filtré est appliqué à un circuit 12 de commande automatique de gain et de restitution de la composante continue. Le signal est ensuite appliqué, d'une part, au décodeur MAC 14 (destiné à fournir le signal d'image) et, d'autre part, aux circuits qui traitent la composante numérique.

Ces circuits comportent un filtre complémentaire 16 destiné à limiter la bande à 5 MHz environ. On verra que, si le récepteur est de type mixte et est prévu pour recevoir également des émissions D-MAC, un commutateur peut être prévu pour éliminer ce filtre à volonté. Le signal issu du filtre 16 est appliqué à deux voies de traitement en parallèle.

La première voie comporte un décodeur duobinaire à seuils 18, un circuit 20 de récupération du signal d'horloge à 10,125 MHz (dont la fréquence est multipliée par deux par un doubleur 22 avant d'être fournie au décodeur MAC 14), un échantillonneur 24 à 10,125 MHz et un circuit de prise de synchronisation 26 alimentant un générateur 28 des fenêtres temporelles requises, constituant la base de temps.

Une autre solution consiste à générer le signal d'horloge à 10,125 MHz à partir d'une récupération de rythme à 20,25 MHz, par division.

La première voie comporte encore le circuit 30 de traitement de la ligne 625 permettant de connaître l'affectation des lignes de la suppression trame utilisées pour le télétexte et de localiser les salves qui ne sont pas transmise à format fixe.

La constitution décrite jusqu'ici est classique et, pour cette raison, n'exige pas de description détaillée.

La deuxième voie, affectée au décodage de Viterbi, comporte un convertisseur analogique/numérique d'entrée 32 qui ne serait pas nécessaire dans le cas d'un décodage à seuils utilisant un critère de décision "dur" . Une quantification sur quatre à six bits est généralement suffisante. Le convertisseur 32 attaque le décodeur de Viterbi 34. Les données D et le signal d'horloge H fournis par ce décodeur sont appliqués à un circuit 36 de reconstitution des salves.

Le circuit 36 de reconstitution des salves a pour rôle de reconstituer les salves numériques avec un retard d'une ligne. En effet, le décodage de Viterbi entraîne un retard à la décision : la décision sur l'échantillon reçu à l'instant to = nT n'est prise qu'après réception de l'échantillon reçu à l'instant t1 = (n + p)T, p étant généralement compris entre 20 et 40. Les derniers échantillons d'une salve ne peuvent donc être décodés que lorsque sont disponibles les premiers échantillons de la salve suivante, du moins si l'on souhaite un fonctionnement optimum. Le circuit 36 de reconstitution comporte essentiellement une mémoire de ligne ayant une capacité suffisante pour mémoriser les informations partiellement décodées pendant chaque intervalle de suppression ligne pour reconstituer ensuite les parties numériques entières.

Enfin, la deuxième voie comporte un circuit 38 de traitement des sons et des données, qui peut avoir une constitution classique et qui n'est pas concerné par l'invention. Ce circuit 38 assure le débrassage et le désentrelacement des trames et il restitue le son et les données.

Le décodeur de Viterbi proprement dit peut avoir la constitution décrite dans la demande de brevet FR 86 15693.

Pour que le décodage soit optimal, le fonctionnement du décodeur de Viterbi doit être interrompu en dehors des périodes de réception de salves utiles, notamment lorsque le signal diffusé provient d'un codeur qui ne s'interrompt pas entre salves utiles. Ce cas est notamment celui prévu par la Norme D2-MAC/PAQUET : pendant la transmission du signal d'image MAC et les périodes d'alignement, la séquence de données est simplement forcée à zéro à l'entrée du codeur duobinaire.

Dans le mode de réalisation illustré en Figure 2, ce résultat est atteint en interrompant le signal provenant de l'horloge 20 appliqué au décodeur de Viterbi après réception de l'échantillon 208 qui correspond au niveau "zéro" à l'entrée du décodeur et jusqu'à l'échantillon 1292, c'est-à-dire pendant 542 périodes du signal d'horloge à 10,125 MHz.

L'interruption est réalisée par un circuit 40 commandé à partir de la base de temps 28 et du circuit 30 de traitement de la ligne 625. Ce dernier circuit programme la base de temps de façon à assurer les interruptions requises.

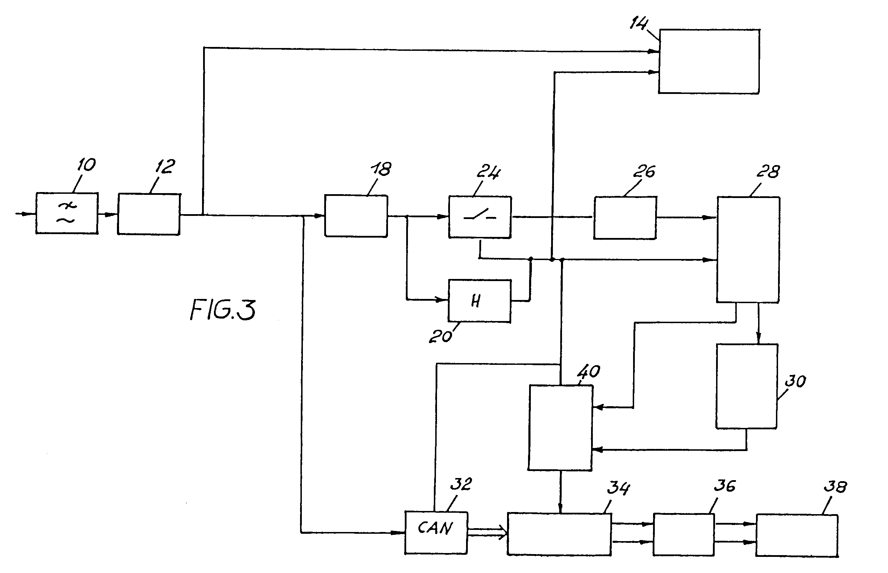

La Figure 3, très similaire à la Figure 2, et sur laquelle les éléments correspondant à ceux de la Figure 2 portent le même numéro de référence, montre une constitution possible d'un dispositif de décodage d'un multiplex D-MAC/PAQUET. Le dispositif de la Figure 3 se différencie essentiellement de celui de la Figure 2 par l'absence du filtre complémentaire à 5 MHz, puisque les composantes numériques et analogiques du signal occupent des bandes de fréquence du même ordre et peuvent être traitées par le même filtre d'entrée 10 à 8,4 MHz. De plus, le signal d'horloge est récupéré à une fréquence égale à 20,25 MHz. puisqu'il est commun à toutes les composantes du récepteur, il n'est plus nécessaire de prévoir un doubleur de fréquence.

Une base de temps 40 est encore prévue pour interrompre l'application du signal d'horloge au décodeur de Viterbi 34 après réception de l'échantillon 208 jusqu'à l'échantillon 1292 de chaque ligne, c'est-à-dire pendant 1084 périodes du signal d'horloge à 20,25 MHz.

On voit qu'un récepteur polyvalent est aisément réalisable, les seules modifications à apporter pour passer du D2 au D étant une commutation portant sur le filtre 16 et le doubleur 22 de la Figure 2 et un changement portant sur la base de temps 40.

Le dispositif de décodage montré en Figures 2 et 3 comporte un circuit de traitement de la ligne 625 qui permet de déterminer la structure du multiplex. Dans la mesure où on s'intéresse uniquement au décodage des informations son-données transmises dans les intervalles de suppression ligne, ce dispositif peut être simplifié, en effectuant le décodage de Viterbi en négligeant les informations complémentaires transmises dans la suppression trame, ce qui en particulier implique qu'on ignore les données contenues dans la ligne 625.

Le procédé mis en oeuvre pour le décodage consiste alors à faire fonctionner le décodeur de Viterbi de la façon suivante en dehors des périodes d'émission des salves utiles (c'est-à-dire pendant les périodes de réception des échantillons 208 à 1292 de chaque ligne D ou D2-MAC/PAQUET) :
- maintien de l'envoi du signal d'horloge au décodeur 34,
- forçage au niveau zéro du signal appliqué à l'entrée du décodeur,

De plus, les métriques doivent être ré-initialisées au début de chaque ligne de télévision susceptible de contenir des informations numériques. Cette ré-initialisation consiste à affecter la même valeur aux métriques correspondant aux deux noeuds 0 et 1 du treillis (au sens de l'algorithme de Viterbi, tel que défini dans la demande de brevet FR 86 15693 déjà mentionnée) avant d'appliquer au décodeur le premier échantillon duobinaire de la salve.

Cette ré-initialisation peut s'effectuer par forçage à un niveau déterminé d'éléments logiques contenus dans les circuits internes du décodeur. Au lieu d'agir directement sur les éléments logiques internes au décodeur, on peut aussi bien ré-initialiser le décodeur depuis l'extérieur, par exemple en envoyant à l'entrée du décodeur de Viterbii, avant le début de chaque salve, un préambule constitué par deux échantillons successifs ayant pour valeur $+V$ et $+V/2$, les signaux à la sortie du codeur duobinaire étant supposés pouvoir prendre les valeurs $+V$, 0 ou -V. On peut également, ce qui revient au même, envoyer deux échantillons successifs de valeurs -V puis -V/2.

Dans le cas d'un signal conforme à la Norme D2-MAC/PAQUET, les derniers bits de chaque salve sont alors décodés avec une probabilité d'erreur qui n'est plus celle du décodage de Viterbi, mais celle du décodage à seuil, ce qui entraîne une légère dégradation par rapport aux performances optimales que permet d'obtenir le dispositif de décodage de la Figure 2.

Dans le cas d'un signal D-MAC/PAQUET, cette dégradation peut être évitée en ajoutant, à la fin de chaque salve numérique, un élément binaire $A_k = 1$. Cette solution peut être adoptée du fait que le dernier bit de chaque salve D (échantillon 207) n'est pas affecté à la transmission de données utiles.

La dégradation des performances porte également sur une partie du mot de synchronisation de ligne transmis au début de chaque salve. Mais cette dégradation ne représente pas un inconvénient réel compte tenu de l'existence d'une voie parallèle spécifique à la synchronisation.

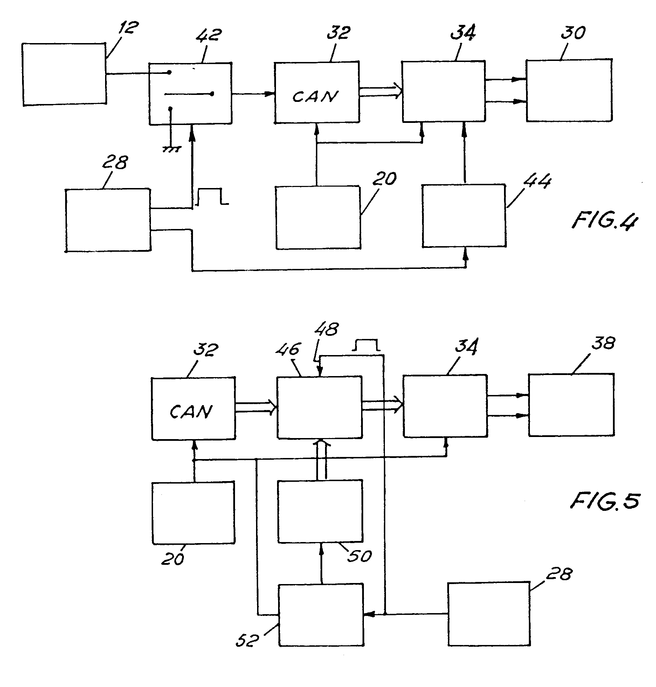

La Figure 4 montre,à titre d'exemple,une constitution possible de la voie de décodage son-données mettant en oeuvre le mode de réalisation qui vient d'être décrit. Le signal provenant du circuit 12 est appliqué au convertisseur analogique/numérique 32 par l'intermédiaire d'un commutateur 42 commandé par un signal provenant de la base de temps 28. Le signal commande la mise à zéro du signal appliqué au convertisseur analogique/numérique 32 pendant chaque période séparant deux salves numériques successives.

Un circuit 44 de ré-initialisation des métriques est également commandé par la base de temps 28. Cette dernière est prévue pour fournir une impulsion à la dernière période d'horloge qui précède le premier échantillon de chaque salve et, en réponse, le circuit 44 affecte la même valeur aux métriques correspondant aux noeuds 0 et 1 du treillis.

Dans la variante de réalisation montrée en Figure 5, les métriques sont ré-initialisées depuis l'extérieur, par application de signaux appropriés à l'entrée du décodeur de Viterbi 34. Le décodeur comprend un commutateur 46 ayant une entrée de commande 48 et transmettant à sa sortie soit un signal provenant du codeur analogique/ numérique 32, soit une séquence fournie par un générateur de séquence duobinaire d'initialisation 50, mémorisée dans le générateur. L'entrée de commande 48 reçoit un signal fourni par la base de temps 28 pendant une fenêtre temporelle correspondant à la durée d'émission des bits 1 à 105 de chaque ligne dans le cas d'un signal D2 MAC PAQUET. Le signal de fenêtre temporelle et le signal d'horloge sont également appliqués à un compteur 52 qui valide le générateur 50 uniquement pendant les intervalles ne contenant pas le signal de son et de données.

Pendant chacune de ces lignes :
- la composante numérique du signal D2 MAC est appliquée à l'entrée du décodeur de Viterbi par le commutateur 46, les niveaux transmis étant égaux à +V, 0 ou -V (codés sur six bits par exemple),
- pendant les bits 106 à 638, le générateur 50 applique à l'entrée du décodeur de Viterbi, par l'intermédiaire du commutateur 46 :
  . le niveau 0 (sous la forme 100000 en cas de codage sur six bits) pour les bits 106 à 646 de la ligne,
  . le niveau +V (sous la forme 111111) pour le bit 647,
  . le niveau +V/2 (sous la forme 110000) pour le bit 648.

Dans une autre variante encore de réalisation, le dispositif ne comporte pas de circuit de réinitialisation des métriques, ce qui représente une simplification supplémentaire. La dégradation du décodage est en contrepartie accrue et en particulier des erreurs systématiques apparaissent à la détection du mot de synchronisation de ligne, ce qui est sans conséquence dans la mesure où la synchronisation de ligne s'effectue uniquement à partir du mot de synchronisation de trame.

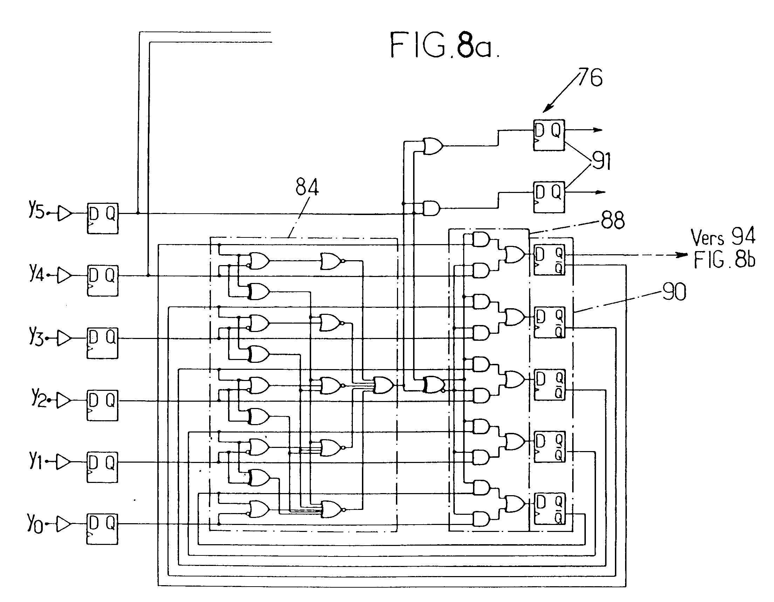

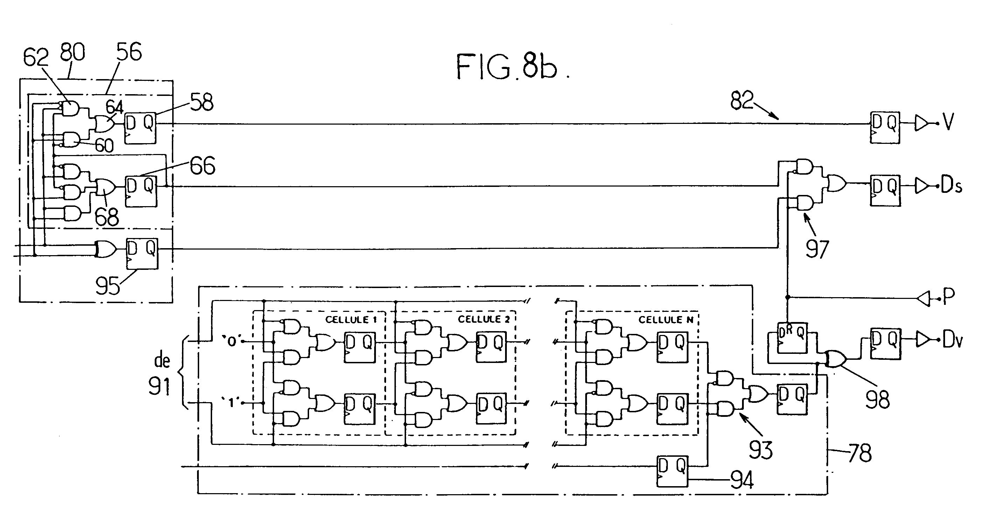

Avant de décrire en détail, en faisant référence aux figures 8a et 8b, la constitution d'un décodeur de Viterbi utilisable, avec une quantification sur six bits, on définira la façon dont l'algorithme de Viterbi peut être adapté au codage duobinaire.

On supposera que le signal émis $c_k$ est de la forme :

$$c_k = s_k + s_{k-1} \text{ et } s_k = a_k \oplus s_{k-1},$$

les valeurs $a_k$ étant celles des éléments successifs appliqués au codeur.

Les séquences à transmettre sont de longueur finie et peuvent s'écrire :

$$[S(D)]_O^N = \sum_{k=1}^{N} s_k \cdot D^k$$

(où D est l'opérateur correspondant à un retard égal au temps bit T).

Dans la pratique, on est amené à s'intéresser essentiellement aux séquences partielles

$$[S(D)]_i^j = \sum_{k=i+1}^{j} s_k \cdot D^K$$

avec i inférieur à j.

Une séquence $[C(D)]_n^N$ se déduit de la séquence $[S(D)]_n^N$ correspondante à partir de la donnée $s_n$ qui est donc une variable définissant l'état du système à l'instant nT (T étant la durée du temps bit).

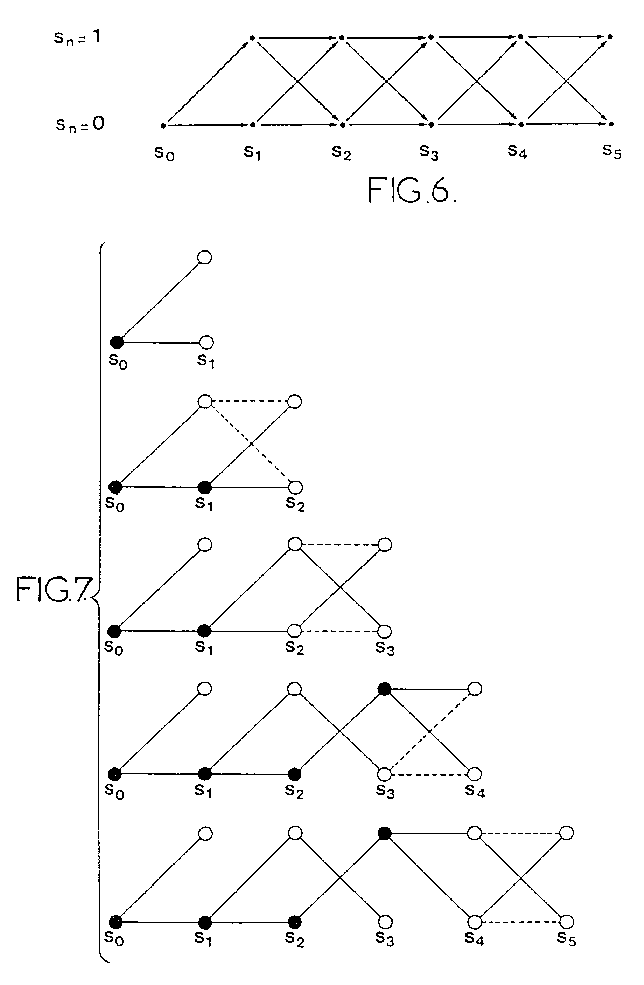

L'évolution de l'état du codeur en fonction du temps peut être représentée par le treillis de la figure 6, dont les noeuds correspondent aux états successifs du système. Les symboles $c_n$ émis sont entièrement définis par les transitions d'un noeud $s_n$ au noeud suivant $s_{n+1}$.

Du fait de la présence d'un bruit, on peut écrire la suite des échantillons obtenus à la réception, après passage par le support 16 de la figure 1, sous la forme :

$$y_k = c_k + n_k$$

ou :

$$Y(D) = C(D) + N(D)$$

(où 1 + D est le polynôme générateur du codage duobinaire).

On définira p ($[Y(D)]_o^N$ /$[S(D)]_o^N$ ) comme la densité de probabilité de la séquence [ $Y(D)]_o^N$ reçue conditionnellement à l'émission de la séquence [ $S(D)]_o^N$. La démodulation selon le critère de maximum de vraisemblance a posteriori consiste à choisir la séquence qui maximise cette densité de probabilité ou, ce qui est équivalent, son logarithme népérien:

$$\ln p\{[ Y(D)]_o^N | [ S(D)]_o^N \}$$

Du fait de l'indépendance des échantillons de bruit $n_k$, on peut écrire :

$$\ln p \left\{ [Y(D)]_o^N | [S(D)]_o^N \right\} =$$

$$\ln \pi_{K=1}^N p(y_K) | s_K, s_{K-1}) = \Sigma_{K=1}^N \ln p(y_K | s_K, s_{K-1})$$

Cette quantité, qui mesure la vraisemblance du chemin $[S(D)]_o^N$, sera appelée dans la suite sa métrique $\Gamma [S(D)]_o^N$. On définit d'une manière similaire la métrique de tout chemin partiel :

$$\Gamma [ S(D)]_i^j = \Sigma_{K=i+1}^j \ln p (y_K | s_K, s_{K-1})$$

On peut écrire :

$$[ S(D)]_o^N = \Gamma[ S(D)]_o^n + \Gamma[ S(D)]_n^N$$

Cette formule fait apparaître le caractère additif des métriques, dû à l'indépendance des échantillons de bruit.

L'algorithme de Viterbi prend en considération, parmi les $2^N$ sequences possibles, la séquence de métrique maximale :
$[ \hat{S}(D)]_o^N$

Le chemin partiel [ $\hat{S}(D)]_o^n$ qui aboutit à l'état $s_n$ est, parmi l'ensemble des chemins partiels aboutissant à l'état $s_n$, le chemin de métrique maximale.

On appellera "survivant" un noeud $s_n$ = m, le chemin de métrique maximale finissant à ce noeud étant $\hat{S}_{n,m}(D)$. A chaque instant nT, on ne conservera en mémoire que les deux survivants correspondant à m = 0 et m = 1 : ce choix ne nuit en rien à l'optimalité du décodage, puisque les chemins partiels éliminés ne sont pas susceptibles d'appartenir au chemin de métrique maximale.

Si on suppose qu'à l'instant nT on connait les deux survivants ainsi que leurs métriques $\hat{S}_{n,o}(D)$ et $\hat{S}_{n,1}$-(D), les survivants à l'instant (n + 1)T en sont nécessairement des prolongements. En chaque noeud, on a $s_{n+1}$ = m, (avec m = 0 ou 1) et on choisira, en fonction de leurs métriques respectives, l'un des deux chemins :

$$\hat{S}_{n,o}(D) + s_{n+1}D^{n+1} \text{ et}$$
$$\hat{S}_{n,1}(D) + s_{n+1}D^{n+1}.$$

On définit ainsi les survivants à l'état n + 1 que l'on conserve en mémoire ainsi que les métriques associées : la décision s'effectue ainsi par un processus itératif dont un exemple est donné sur la figure 7, où les noeuds communs à deux survivants sont indiqués par des cercles pleins alors que les autres noeuds sont indiqués par des cercles vides.

On pourra trouver une description du processus, mais uniquement dans son application au décodage des codes convolutifs, dans A.J.VITERBI, "Convolutional codes and their performances in communication systems" IEEE Trans.Commun.Technol,vol.COM, Oct. 19, 1971.

La convergence vers les survivants est statiquement assurée, même avec un choix arbitraire des conditions initiales. Dès que la convergence est obtenue, la décision peut être prise, car la portion commune appartient au chemin de métrique maximale(D). Une convergence quasi certaine est obtenue avec une capacité de mémoire prédéterminée. Dans la pratique, il suffira, dans le cas du codage duobinaire, d'adopter un treillis de 22 cellules.

Le calcul des métriques, étant en lui-même bien connu, ne sera pas repris ici. Il suffit de relever que le chemin optimal $\hat{S}(D)$ est celui qui minimise l'erreur quadratique moyenne entre la séquence $\hat{c}_k$ associée et le signal $y_k$ reçu, du fait de la nature gaussienne du bruit. Pratiquement on peut adopter, pour les métriques, l'expression :

$$\gamma[S(D)]_o^N = \Sigma_{K=1}^N (c_K^2/2 - c_K \cdot y_K)$$

On décrira maintenant, en faisant référence aux figures 8a et 8b, un circuit décodeur pouvant remplir les fonctions du circuit 34 de la figure 2. Ce circuit remplit également des fonctions supplémentaires dont il sera question plus loin et peut être regardé comme comprenant :
- un circuit 76 de calcul des métriques,
- un circuit 78 de gestion des survivants,
- un circuit 80 de contrôle de taux de viol et de décodage à seuils,
- un interface de sortie 82.

On supposera que la quantification de chaque echantillon y s'effectue sur n = 6 bits $y_0$ à $y_5$ ($y_0$ étant le bit de poids faible) et que la gestion des survivants s'effectue avec N = 22; ce nombre étant généralement suffisant pour assurer la convergence.

L'échelle de quantification est définie par un intervalle [-A, A] divisé en 2 intervalles élémentaires ; les signaux $c_k$ sont supposés prendre les valeurs -1, 0 et + 1. Lorsqu'un échantillon $y_k$ est reçu, on l'assimile au milieu de l'intervalle élémentaire auquel il appartient. Le choix A = 1 constitue généralement un compromis satisfaisant et sera adapté d'autant plus qu'il facilite le calcul des métriques.

Si on appelle q = 1/32 le pas de quantification on aura alors :

$$
\begin{array}{llll}
\text{pour} & y_k > 32q, & \hat{y}_k = 31,5q = & 111\ 111 \\
& 32q \geqslant y_k > 31q, & \hat{y}_k = 31,5q = & 111\ 111 \\
& 31q \geqslant y_k > 30q & \hat{y}_k = 30,5q = & 111\ 110 \\
& \text{--------} & & \\
& q \geqslant y_k > 0 & \hat{y}_k = 0,5q = & 100\ 000 \\
& \text{--------} & & \\
& -32q \geqslant y_k & \hat{y}_k = -31,5q = & 000\ 000
\end{array}
$$

La réalisation pratique du décodeur peut tenir compte du fait qu'il suffit de mémoriser, à chaque temps cycle, la différence $\mu_k$ des métriques :

$$\mu_k = \gamma_{0,k} - \gamma_{1,k}$$

On peut associer aux métriques $\hat{\mu}_K$ des mots de 5 bits, suivant une loi similaire à la précédente.

$$
\begin{array}{lll}
\hat{\mu}_K = & 15,5q = & 11\ 111 \\
\text{-------} & & \\
\hat{\mu}_K = & 0,5q = & 10\ 000 \\
\text{-------} & & \\
\hat{\mu}_K = & -15,5q = & 00\ 000
\end{array}
$$

$/\widehat{\mu}_k/$ étant majoré par $y_m - 1/2 = 15,5q$ et limité. à $1/2$.

Le calcul montre alors qu'on a :

$(y^5)_k = 1 : (\mu)_k = \max [(\overline{\mu})_{k-1}, (y)_k]$
$(y^5)_k = 0 : (\mu)_k = \min [(\overline{\mu})_{k-1}, (y)_k]$

Le circuit 76 de la figure 8a constitue un automate séquentiel qui calcule $(\mu)_k$ en un cycle d'horloge. Il peut être regardé comme comportant :

- un comparateur 84 dont la sortie vaut 1 si $(Y)_k > (\mu)_{k-1}$, 0 dans le cas contraire ;
- une porte OU EXCLUSIF 86 entre la sortie du comparateur 84 et $(y_5)_k$, faisant le choix entre les valeurs max et min. ci-dessus ;
- un multiplexeur 88 fournissant en sortie $(y)_k$ ou $(\overline{\mu})_{k-1}$, suivant le niveau de sortie de la porte 86 ;
- un registre 90 à cinq bascules permettant de stocker le mot suivant $(\mu)_k$ ;
- deux registres supplémentaires 91 à chacun une bascule, pour stocker le résultat des fonctions:
ET entre $y_5$ et la sortie du comparateur, c'est-à-dire
$C_{0,k}$,
OU entre $y_5$ et la sortie du comparateur, c'est-à-dire
$C_{1,k}$

Le circuit 78 de gestion des survivants comporte deux rangées de bascules synchrones de type D. Les rangées supérieure et inférieure correspondent respectivement aux survivants aux noeuds $s_n = 0$ et $s_n = 1$. Chaque rangée comporte N bascules. Deux bascules de même rang sont associées à un multiplexeur pour constituer une cellule élémentaire parmi N cellules identiques. Toutes les cellules reçoivent en entrée de commande les sorties des registres 91, qui assurent le décalage vers la droite et l'échange simultané entre registres successifs des cellules. Le multiplexeur de la porte d'ordre 1 reçoit en entrée les niveaux logiques 0 et 1, mémorisés l'un ou l'autre dans les bascules suivant les valeurs de $C_{0,k}$ et $C_{1,k}$.

Les bascules de la cellule d'ordre N constituent un registre qui attaque un réseau de portes formant multiplexeur 93, dont l'entrée de sélection est reliée à la sortie Q d'une bascule synchrone de type D 94, attaquée par la sortie Q du registre correspondant au bit $Y_4$.

Le nombre N de cellules est avantageusement choisi de façon à garantir une convergence quasi certaine des survivants. Mais, si cette convergence n'est pas obtenue, on obtient néanmoins le survivant de plus grande vraisemblance à la sortie du multiplexeur, commandé par $\mu_4$ (quatrième bit de $\mu$), c'est-à-dire par le signe de la différence des métriques.

Le décodeur comporte encore un circuit 80 (figure 8b) qui détermine le taux de viols du code (représentatif du taux d'erreurs) à l'aide d'un circuit 56, il réalise également un décodage à seuils permettant de disposer à volonté du résultat de l'un ou l'autre de deux types de décodage. La détermination du taux de viols permet notamment de faire une adaptation automatique des seuils de quantification par des moyens non décrits mais qui peuvent être très simples. Le taux de viols peut également être utilisé comme signal d'entrée d'un circuit de commande automatique de fréquence : l'accord sur la fréquence d'émission est obtenu par recherche du taux de viols minimum.

Le circuit 80 de la figure 8b utilise les deux bits de poids fort $y_5$ et $y_4$ du signal quantifié pour obtenir la donnée. Le signal de données est obtenu par une porte OU EXCLUSIF qui reçoit $y_5$ et $y_4$ et est stocké dans un registre 95 constitué par une bascule synchrone D.

Dans le circuit 56, les signaux provenant de deux bascules correspondant aux bits de poids fort sont appliqués aux deux entrées du détecteur de violation 56. Celui-ci comprend une bascule synchrone de sortie 58 qui fournit une impulsion chaque fois qu'elle reçoit, sur son entrée D, un signal indiquant l'une ou l'autre des transitions interdites. Ces deux transitions sont détectées par des portes ET respectives 60, 62 qui attaquent l'entrée D de la bascule 58 par l'intermédiaire d'une porte OU 64.

Les trois entrées des portes 60 et 62 reçoivent:
- pour la première porte 60, les sorties $Y_4$ et $Y_5$ et la sortie complémentée d'une bascule supplémentaire 66 appartenant au détecteur 56,
- pour la seconde porte 62, les sorties complémentées provenant des bascules correspondant à $Y_4$ et $Y_5$ et la sortie non complémentée de la bascule 66 de type D.

La bascule 66 est elle même commandée, à travers une porte OU 68, par trois portes ET dont les entrées présentent les connexions illustrées en figure 8b.

L'interface de sortie 82 peut avoir diverses constitutions. Il permet, dans le mode de réalisation montré en figure 8b, d'obtenir
- sur une sortie V, le signal de violation ;
- sur une sortie Ds, la donnée récupérée par décodage à seuils et décision "dure";

9

- sur une sortie Dv, la donnée récupérée par décodage de Viterbi.

Chaque sortie comporte un registre constitué par une bascule et un amplificateur. Le registre de la sortie V reçoit directement la sortie du circuit 42. Le registre de la sortie Ds est alimenté par un multiplexeur 97 à deux portes d'entrée qui reçoivent respectivement la sortie du décodeur à seuils et un signal correspondant à l'absence de précodage, suivant le niveau appliqué à l'entrée P. La sortie Ds reproduit la sortie du registre 95 ou du registre amont du circuit 42.

Pour permettre de traiter des signaux précodés ou non précodés, la sortie Dv est munie d'une porte OU EXCLUSIF 98 qui reçoit la sortie du circuit 78 directement et à travers une bascule D dont l'entrée de remise à zéro est reliée à l'entrée P.

On voit que le circuit montré en figures 8a et 8b, constitué de portes et de bascules, est aisément intégrable, par exemple en C-MOS, éventuellement sur réseaux prédiffusés.

**Revendications**

1. Procédé de décodage de données émises sous forme de signaux codés en duobinaire et émis par salves dans un multiplex, caractérisé en ce qu'on numérise le multiplex en bande de base et on le soumet à un décodage de Viterbi en masquant les parties du multiplex qui provoqueraient un viol de la règle de codage duobinaire dû aux interruptions entre salves.

2. Procédé selon la revendication 1, caractérisé en ce qu'on masque lesdites parties en interrompant le décodage pendant lesdites interruptions par interruption du signal d'horloge.

3. Procédé selon la revendication 1 ou 2, caractérisé en ce qu'on traite le multiplex pour reconstituer, avant décodage de Viterbi, une séquence duobinaire dans laquelle il n'existe aucun viol de la règle de codage duobinaire, en éliminant toutes les parties du signal ne représentant pas des messages effectivement diffusés.

4. Procédé selon la revendication 1 ou 2, caractérisé en ce qu'on élimine, avant décodage de Viterbi, toutes les séquences de zéro connues du récepteur par interruption d'horloge de façon à éviter tout débordement dans les registres de mémoire du circuit de décodage de Viterbi.

5. Procédé selon la revendication 1 ou 2, caractérisé en ce qu'on réinitialise le processus de décodage avant le début de chaque salve.

6. Procédé de transmission suivant la norme D-MAC/PAQUET, utilisant un procédé de décodage selon la revendication 1, caractérisé en ce qu'on émet, à la fin de chaque salve, un bit égal à 1.

7. Procédé de transmission suivant la norme D2-MAC/Paquet, ou D-MAC/Paquet, utilisant un procédé de décodage selon la revendication 1, caractérisé en ce qu'un bit de parité est inséré à la fin de chaque ligne de données transmise pendant la période de suppression trame.

8. Dispositif de décodage de données émises sous forme de signaux codés en duobinaire et émis par salves dans un multiplex analogique-numérique en bande de base, caractérisé en ce qu'il comprend d'une part des moyens (18,20) d'extraction d'horloge des signaux codés en duobinaire, d'autre part une voie de décodage ayant un convertisseur analogique-numérique (32) alimentant un décodeur de Viterbi (34), et des moyens destinés à interrompre le fonctionnement du décodeur de Viterbi par interruption, entre salves, du signal d'horloge provenant des dits moyens d'extraction d'horloge et appliqué au décodeur pendant les dites interruptions.

9. Dispositif selon la revendication 8, pour récepteur de télévision suivant la norme D2 ou D MAC PAQUET, caractérisé en ce qu'il comprend de plus des moyens d'analyse de la ligne 625 commandant un circuit (40) d'interruption des signaux d'horloge en dehors des salves émises pendant des intervalles de surpression ligne et de suppression tramme.

10. Dispositif selon la revendication 9, caractérisé en ce qu'il comprend de plus un circuit de reconstitution des salves, comportant une mémoire ayant une capacité compatible avec la longueur des séquences mises en oeuvre par le décodage de Viterbi.

11. Dispositif selon la revendication 8, caractérisé en ce que le décodeur de Viterbi comporte un circuit (44) de ré-initialisation des métriques avant le début de chaque salve, soit par action interne sur les éléments du décodeur de Viterbi (34), soit par action externe en appliquant un préambule particulier à l'entrée du décodeur de Viterbi.

## Claims

1. A method of decoding data transmitted in the form of duobinary coded signals transmitted in bursts in a multiplex, characterised in that the multiplex is digitised in baseband and subjected to Viterbi decoding by masking those parts of the multiplex which would cause a violation of the duobinary coding rule due to the interruptions between bursts.

2. A method according to claim 1, characterised in that the aforementioned parts are masked by interrupting the coding during the aforementioned interruptions by interrupting the clock signal.

3. A method according to claim 1 or 2, characterised in that the multiplex is processed so as to reconstitute, before Viterbi decoding, a duobinary sequence in which there is no violation of the duobinary coding rule, by eliminating all parts of the signal not representing messages which are actually broadcast.

4. A method according to claim 1 or 2, characterised in that before Viterbi decoding, all zero sequences known by the recipient are eliminated by interrupting the clock, so as to avoid any spill-over into the storage registers of the Viterbi decoding circuit.

5. A method according to claim 1 or 2, characterised in that the decoding process is re-initialised before the beginning of each burst.

6. A method of transmission according to the D-MAC/PAQUET standard, using a method of decoding according to claim 1, characterised in that a bit equal to unity is transmitted at the end of each burst.

7. A method of transmission according to the D2-MAC/Paquet or D-MAC/Paquet standard, using a method of decoding according to claim 1, characterised in that a parity bit is inserted at the end of each line of data transmitted during the vertical blanking period.

8. A device for decoding data transmitted in the form of duobinary coded signals transmitted in bursts in a baseband analog-digital multiplex, the device being characterised in that it comprises means (18, 20) for clock extraction of duobinary coded signals, and also comprises a decoding channel containing an analog/digital converter (32) supplying a Viterbi decoder (34), and means for interrupting the operation of the Viterbi decoder by interrupting, between bursts, the clock signal coming from the aforementioned clock extraction means and applied to the decoder during the aforementioned interruptions.

9. A device according to claim 8 for a television receiver as per the D2 or D MAC PAQUET standard, characterised in that it also comprises means for analysing the line 625 controlling a circuit (40) for interrupting the clock signals outside the bursts transmitted during the line blanking and vertical blanking intervals.

10. A device according to claim 9, characterised in that it also comprises a burst reconstitution circuit comprising a store having a capacity compatible with the length of the sequences used in Viterbi decoding.

11. A device according to claim 8, characterised in that the Viterbi decoder comprises a circuit (44) for re-initialising the metrics before the beginning of each burst, either by internal action on the components of the Viterbi decoder (34) or by external action by supplying a special preamble to the input of the Viterbi decoder.

## Patentansprüche

1. Verfahren zur Decodierung von Daten, die in Form von duobinär codierten und in Salven in einem Multiplex gesendeten Signalen gesendet werden, dadurch **gekennzeichnet,** daß das Multiplex im Basisband digitalisiert wird und einer Viterbi-Decodierung unterzogen wird, indem die Teile des Multiplex ausgeblendet werden, die eine Verletzung der duobinären Codierungsregel aufgrund der Unterbrechungen zwischen Salven herbeifuhren wurden.

2. Verfahren nach Anspruch I, dadurch **gekennzeichnet,** daß die Teile ausgeblendet werden, indem die Decodierung während der Unterbrechungen durch Unterbrechung des Taktsignals unterbrochen wird.

3. Verfahren nach Anspruch I oder 2, dadurch **gekennzeichnet,** daß das Multiplex verarbeitet wird, um vor der Viterbi-Decodierung eine duobinäre Sequenz wiederherzustellen, in der keine Verletzung der duobinären Codierungsregel vorhanden ist, indem sämtliche Teile des Signals eliminiert werden, die keine tatsächlich übertragenen Nachrichten darstellen.

4. Verfahren nach Anspruch 1 oder 2, dadurch **gekennzeichnet,** daß vor der Viterbi-Decodierung sämtliche bekannten Null-Sequenzen des Empfängers durch Taktunterbrechung eliminiert werden, so daß jegliches Überlaufen in den Speicherregistern des Viterbi-Decodierungskreises vermieden wird.

5. Verfahren nach Anspruch 1 oder 2, dadurch **gekennzeichnet,** daß der Decodierungsprozeß vor dem Beginn jeder Salve wieder initialisiert wird.

6. Übertragungsverfahren nach der D-MAC/PAKET-Norm, bei dem ein Decodierungsverfahren nach Anspruch 1 verwendet wird, dadurch **gekennzeichnet,** daß am Ende jeder Salve ein Bit gleich 1 gesendet wird.

7. Übertragungsverfahren nach der D2-MAC/PAKET- oder D-MAG/PAKET-Norm, bei dem ein Decodierungsverfahren nach Anspruch 1 verwendet wird, dadurch **gekennzeichnet,** daß ein Paritätsbit am Ende jeder übertragenen Datenzeile während der Halbbildunterdrückungsperiode eingefügt wird.

8. Vorrichtung zur Decodierung von Daten, die in der Form von Signalen gesendet werden, die duobinär codiert sind und in Salven in einem analog-digitalen Multiplex im Basisband gesendet werden, dadurch **gekennzeichnet,** daß sie einerseits Mittel (18, 20) zur Taktgewinnung der duobinär codierten Signale, andererseits einen Decodierungskanal umfaßt, der einen einen Viterbi-Decodierer (34) speisenden Analog-Digital-Umsetzer (32) und Mittel umfaßt, die dazu bestimmt sind, die Funktion des Viterbi-Decodierers durch Unterbrechung des Taktsignals zwischen den Salven zu unterbrechen, das von den Mitteln zur Taktgewinnung ausgeht und auf den Decodierer während der Unterbrechungen gegeben wird.

9. Vorrichtung nach Anspruch 8, für Fernsehempfänger nach der D2- oder D-MAC/PAKET-Norm dadurch **gekennzeichnet,** daß sie außerdem Analysemittel für die Zeile 625, steuernd einen Kreis (40) zur Unterbrechung der Taktsignale abgesehen von den während der Intervalle zur Zeilenunterdrückung und Halbbildunterdrückung gesendeten Salven, umfaßt.

10. Vorrichtung nach Anspruch 9, dadurch **gekennzeichnet,** daß sie außerdem einen Kreis zur Wiedergewinnung der Salven umfaßt, enthaltend einen Speicher, der eine mit der Länge der durch die Viterbi-Decodierung gebrauchten Sequenzen kompatiblen Kapazität aufweist.

11. Vorrichtung nach Anspruch 8, dadurch **gekennzeichnet,** daß der Viterbi-Decodierer einen Kreis (44) zur Wiederinitialisierung der Metrischen vor dem Beginn jeder Salve entweder durch interne Einwirkung auf die Elemente des Viterbi-Decodierers (34) oder durch externe Wirkung umfaßt, indem eine Spezialpräambel auf den Eingang des Viterbi-Decodierers gegeben wird.

EP 0 295 974 B1

FIG.1

13

FIG.2

FIG.3

EP 0 295 974 B1

FIG.4

FIG.5

FIG.6.

FIG.7

FIG.8a.

Vers 94
FIG.8b

76

91

88

90

84

Y5
Y4
Y3
Y2
Y1
Y0

FIG.8b.

EP 0 295 974 B1